# EUROPEAN PATENT SPECIFICATION

(11) **EP 2 323 448 B1**
(45) Date of publication and mention of the grant of the patent: **26.12.2012**
(21) Application number: 10187040.0
(22) Date of filing: 08.10.2010
(51) Int. Cl.: H04W 52/02

(54) **Determination by a terminal of the ability of a base station to support correctly power saving mode**
Bestimmen der Fähigkeit einer Basestation, den Power Saving Mode richtig zu Unterstützen durch ein Endgerät
Détermination par un terminal de la capacité d'une station de base à supporter correctement un mode d'économie d'énergie

(30) Priority: 13.11.2009 JP 2009260104
(43) Date of publication of application: 18.05.2011
(73) Proprietor: Canon Kabushiki Kaisha, Tokyo 146-8501 (JP)
(72) Inventor: Nakahara, Masanori, Ohta-ku Tokyo (JP)
(74) Representative: Foxon, Rachel Siobhan

(56) References cited:
- WO-A1-2008/142588
- US-A1- 2004 097 268
- US-A1- 2008 130 542

## Description

### BACKGROUND OF THE INVENTION

### Field of the Invention

The present invention relates to a communication apparatus equipped with a power saving mode.

### Description of the Related Art

A wireless local area network (LAN) has an active mode and a power saving mode conforming to the Institute of Electrical and Electronics Engineers (IEEE) 802.11 series as communication modes. In active mode, a communication apparatus can always receive packets from a base station. In power saving mode, the communication apparatus communicates with the base station by switching between a first state (doze) in which the communication apparatus does not receive packets from the base station by reducing power consumption and a second state (awake) in which the communication apparatus can receive packets from the base station without reducing power consumption.

The base station monitors whether the communication apparatus is in active mode or power saving mode. If the communication apparatus is in power saving mode, the base station buffers (stores) packets and transmits packets to the communication apparatus in response to a packet request from the communication apparatus.

A technique of cheking whether a communication apparatus and a base station are successfully associated (connected) when the communication apparatus and an access point (base station) are associated is known (Japanese Patent Application Laid-Open No. 2007-81890).

However, even if the communication apparatus and the base station are successfully associated, packet losses or packet delays may frequently occur depending on the associated base station when the communication apparatus shifts to the power saving mode so that the communication apparatus cannot communicate normally. For example, some base stations transmit packets addressed to a communication apparatus even if the communication apparatus is in the doze state. The communication apparatus in the doze state cannot receive the packets, thus resulting in packet losses.

When communicating with a base station that does not support such a power saving mode, a communication apparatus needs to communicate in active mode because normal communication is not performed if the communication apparatus is in power saving mode. However, the communication apparatus has not been able to judge whether a base station supports the power saving mode. Therefore, when a base station is to be communicated with, the communication apparatus has not been able to decide whether communication may be performed in power saving mode.

WO 2008/142588 discloses a method and apparatus having detection functionality to determine if a wirelessly connected node, point or terminal in a wireless network configured to operate according to a predefined power saving scheme operates incorrectly. The predefined power saving scheme is adjusted if an incorrect power saving operation is detected. The detection functionality includes probing types of power saving protocol tests and using lower and higher-layer protocol information to detect if the mobile device might be missing some data.

US 2008/0130542 discloses a mobile station, communicating with an access point, which includes an association module, a mode switching module, a verifying module and a recording module. The verifying module transmits a first test frame, then transmits a data acquiring frame to the access point to acquire the first test frame, presets a period of time for receiving the first test frame and determines whether a time when the first test frame is received is after or before the preset period of time. The recording module records whether the access point supports Frame Exchange Sequence to switch between the active mode and the power saving mode according to a determined result of the verifying module.

### SUMMARY OF THE INVENTION

The present invention is directed to enabling a communication apparatus to decide whether communication may be performed in power saving mode when a base station is to be communicated with.

According to a first aspect of the present invention, there is provided a communication apparatus as specified in claims 1 to 4. According to a second aspect of the present invention, there is provided a method as specified in claim 5. According to a third aspect of the present invention, there is provided a program as specified in claim 9. According to a fourth aspect of the present invention, there is provided a computer-readable storage medium as specified in claim 10.

According to an exemplary embodiment of the present invention, a communication apparatus judges whether a base station is one that transmits packets in such a way that an apparatus in power saving mode can receive packets within a predetermined time. Therefore, when a base station is to be communicated with, the communication apparatus can decide whether communication may be performed in power saving mode.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.

Fig. 1 is a system configuration diagram according to a first example.

Figs. 2A to 2C are hardware configuration diagrams of a printer and a personal computer (PC).

Figs. 3A and 3B are functional block diagrams of the printer and PC.

Fig. 4 is a sequence chart when an access point (AP) and the printer communicate.

Figs. 5A and 5B are flow charts executed by the printer.

Fig. 6 is a flow chart executed by the PC.

Fig. 7 is a sequence chart when the AP, printer, and PC communicate.

### DESCRIPTION OF THE EMBODIMENTS

Various exemplary embodiments, features, and aspects of the invention and examples will be described in detail below with reference to the drawings.

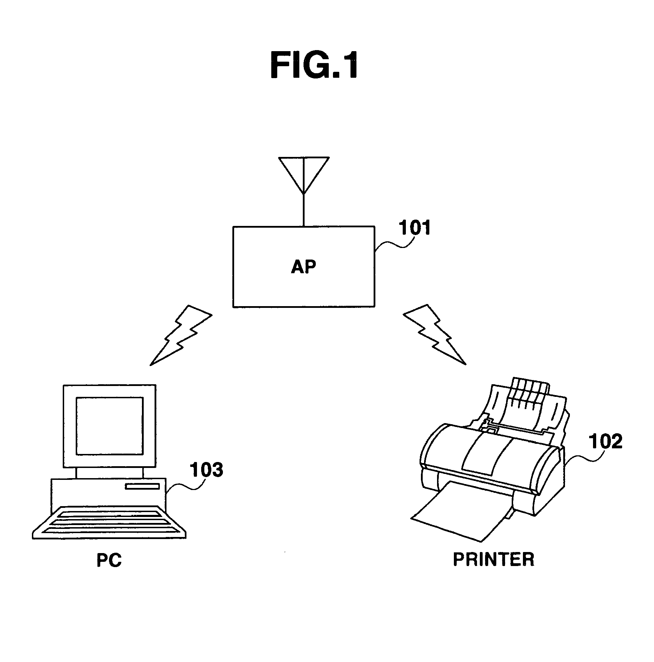

Fig. 1 is a system configuration diagram according to a first example, falling outside the scope of the present invention. A communication system according to the present example is a wireless LAN system conforming to the IEEE802.11 series. However, the communication system may be constructed based on Bluetooth, Wireless USB (WUSB), or the like.

An AP (access point, base station) 101 builds a wireless LAN, and a printer 102 is equipped with a wireless (radio communication) function. The printer 102 is provided with the active mode and power saving mode conforming to the IEEE802.11 series as communication modes. In active mode, the communication apparatus can always receive packets from the base station. That is, the communication apparatus is always in an awake state. In power saving mode, the communication apparatus communicates with the base station by switching between the first state (doze) in which the communication apparatus does not receive packets from the base station by reducing power consumption and the second state (awake) in which the communication apparatus can receive packets from the base station without reducing power consumption.

The base station monitors whether the communication apparatus is in active mode or power saving mode. If the communication apparatus is in power saving mode, the base station buffers (stores) packets and transmits packets to the communication apparatus in response to a packet request from the communication apparatus.

By using the power saving mode described above, the printer 102 can communicate with the AP 101 while reducing power consumption. When the communication mode of the printer 102 is the active mode, the printer 102 is always in the awake state and can always receive packets from the AP 101. A PC 103 communicates with the printer 102 via the AP 101.

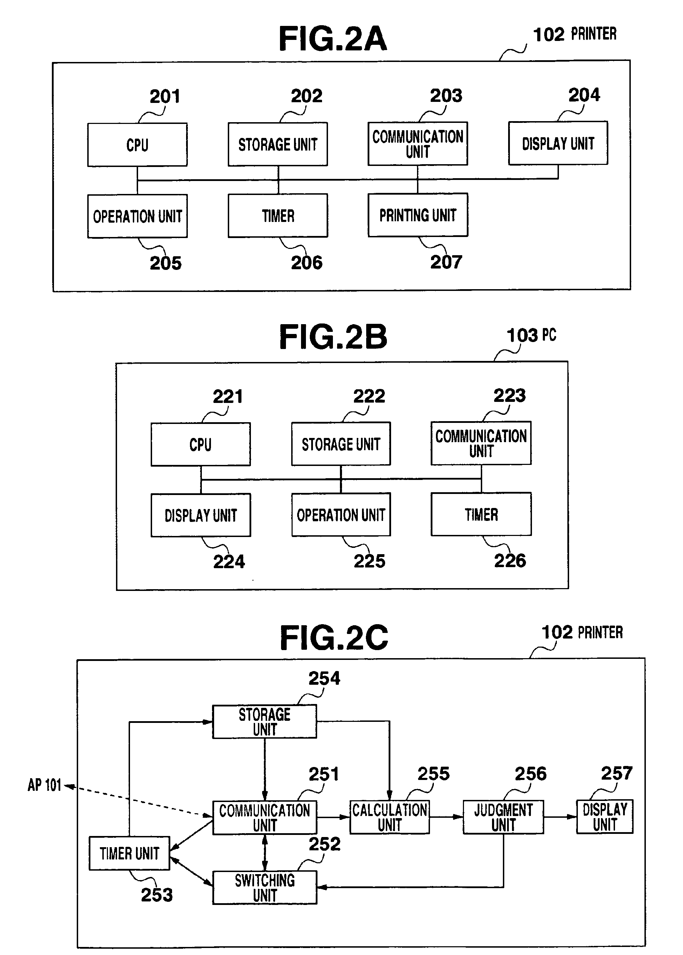

Fig. 2A illustrates a hardware configuration diagram of the printer 102. A central processing unit (CPU) 201 reads a program stored in a storage unit described below to execute the program. A storage unit 202 includes a memory such as a random access memory (RAM) and a read only memory (ROM) . The storage unit 202 stores Listen Interval (LI) specified by IEEE802.11 as information concerning the power saving mode. If the value set to the LI is n, the printer 102 receives a beacon as an informative signal transmitted by the AP 101 once in every n times. Here, the LI is set to two and the printer 102 receives the beacon transmitted by the AP 101 once in every two times. The storage unit 202 also stores a program described below. A communication unit 203 having an antenna performs radio communication with the AP 101. A display unit 204 makes various kinds of display. An operation unit 205 receives operations from a user. The display unit 204 and the operation unit 205 may be formed to be the same component by using a touch panel or the like. A timer 206 measures time. A printing unit 207 performs printing based on data received from the AP 101 via the communication unit 203. These hardware components are connected by a bus.

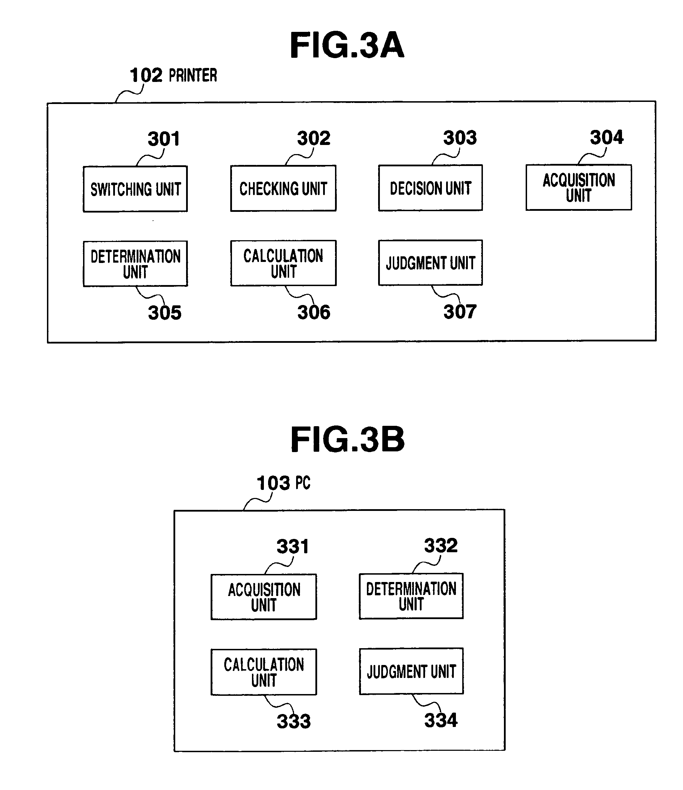

Fig. 3A illustrates a functional block diagram realized by a program stored in the storage unit 202 being read by the CPU 201.

A switching unit 301 switches the communication unit 203 from the doze state to the awake state or from the awake state to the doze state. With the state of the communication unit 203 being switched by the switching unit 301, the printer 102 can realize the power saving mode. A checking unit 302 checks whether a beacon from the AP 101 is received. A decision unit 303 decides whether there is any data packet addressed to the printer 102 itself based on a traffic indication map (TIM) contained in the beacon. The TIM is an information element storing various kinds of information about the power saving mode. An acquisition unit 304 acquires a delay time between the time when the printer 102 transmits a self-packet and the time when the self-packet is received from the AP 101. The self-packet is a uni-cast data packet whose destination is set to the printer 102 itself. A determination unit 305 determines whether the self-packet has been transmitted a predetermined number of times. A calculation unit 306 calculates an average value of the delay times. A judgment unit 307 judges whether the average value of the delay times calculated by the calculation unit 306 is greater or smaller than a predetermined time.

These functional blocks may be realized by a hardware configuration such as an application specific integrated circuit (ASIC) illustrated in Fig. 2C.

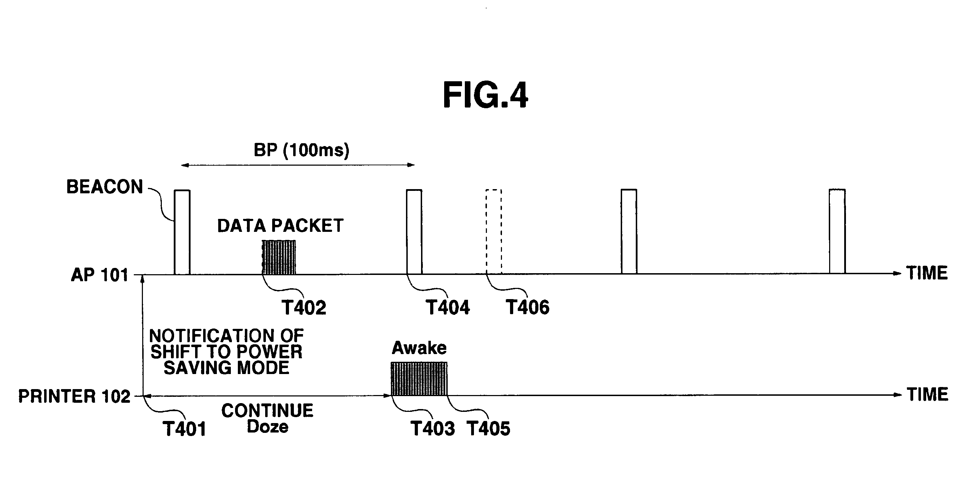

Fig. 4 illustrates a sequence chart when the printer 102 communicates with the AP 101 in power saving mode. The printer 102 makes a notification of shift to the power saving mode at time T401 and retains the doze state till time T403. At time T403, the printer 102 shifts to the awake state to receive a beacon transmitted by the AP 101 at time T404.

The printer 102 receives the beacon from the AP 101 in the awake state to decide whether there is any data packet addressed to the printer 102 itself. Here, the printer 102 decides whether there is any data packet addressed to the printer 102 itself by checking the TIM contained in the beacon from the AP 101. If there is no data packet addressed to the printer 102 itself, the printer 102 shifts to the doze state at time T405. If there is a data packet addressed to the printer 102 itself, the printer 102 notifies the AP 101 that the printer 102 has shifted to the active mode using the power management bit (PM bit). Then, the printer 102 receives data packets from the AP 101. When reception of data packets is completed, the printer 102 shifts to the power saving mode again. When shifting to the power saving mode, the printer 102 notifies the AP 101 of shift to the power saving mode using the PM bit.

The printer 102 may receive data packets from the AP 101 by transmitting, instead of the PM bit, a request packet called PsPoll to the AP 101. PsPoll is a packet used by the printer 102 in power saving mode to request transmission of packets addressed to the printer 102 from the AP 101. Accordingly, the printer 102 can receive packets from the AP 101 without switching the communication mode.

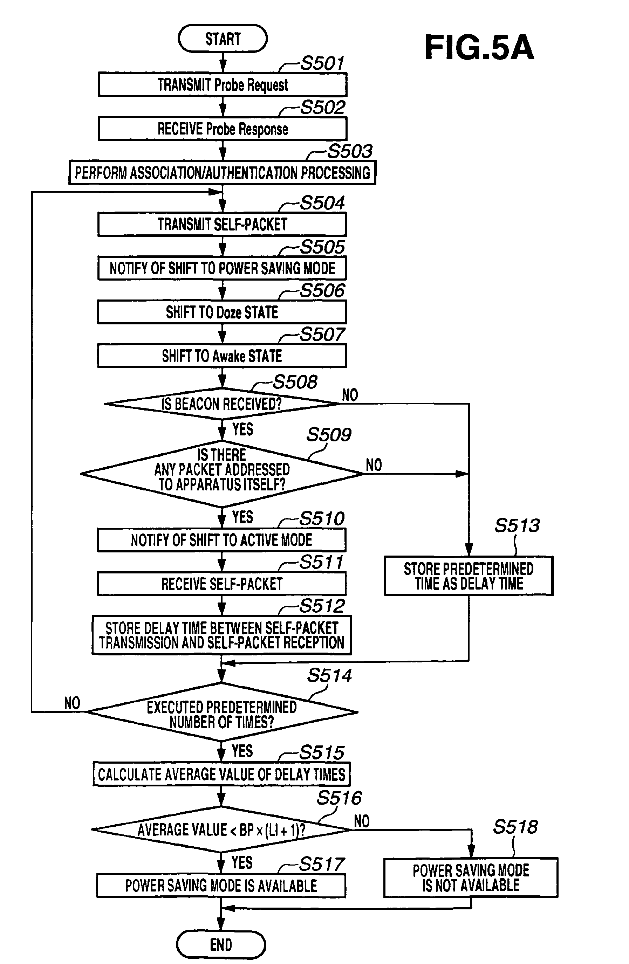

Fig. 5A illustrates a flow chart executed with a program stored in the storage unit 202 being read by the CPU 201. The flow chart is executed when the printer 102 is turned on. In step S501, the communication unit 203 transmits a probe request (search request) to search for APs present around the communication unit 203. Here, the AP 101 receives the probe request transmitted by the printer 102 and the AP 101 transmits a probe response (search response) toward the printer 102 as a response thereof. In step S502, the communication unit 203 receives the probe response transmitted by the AP 101. The probe response contains information about power saving. The information about power saving contains a beacon period (BP) of the AP 101. Here, the BP is set to 100 ms. Further, the information contains a delivery traffic indication message (DTIM) period that defines the timing of multi-casting or broadcasting of the AP 101. Here, the value of DTIM is set to five. Therefore, the AP 101 multi-casts or broadcasts in a cycle of 500 ms (BP x DTIM) . The information about power saving received in step S502 is stored in the storage unit 202.

In step S503, the communication unit 203 performs association/authentication processing conforming to IEEE802.11 series with the AP 101. During association processing, the communication unit 203 notifies the AP 101 of the LI (2, for example) set to the printer 102. Depending on the encryption method, an authentication sequence of Wi-Fi protected access (WPA) may also be executed.

In step S504, the communication unit 203 transmits a data packet (self-packet) whose destination is set to the printer 102 to the AP 101. In step S505, the communication unit 203 notifies the AP 101 that the printer 102 shifts to the power saving mode using the PM bit. Then, in step 5506, the switching unit 301 switches the communication unit 203 from the active mode to the power saving mode. After shifting to the power saving mode, the communication unit 203 retains the doze state for a predetermined time specified by the BP (100 ms, for example) and the LI (2, for example) . If, for example, the doze state is entered at time T401 illustrated in Fig. 4, the communication unit 203 retains the doze state for a period (predetermined time) from time T401 to time T403.

Subsequently, in step S507, the switching unit 301 switches the communication unit 203 to the awake state to receive a beacon from the AP 101. In step S508, the checking unit 302 checks whether a beacon from the AP 101 has been received within a predetermined period via the communication unit 203. Within the predetermined period here means within a period in which the communication unit 203 is in the awake state (from time T403 to time T405 in Fig. 4). If a beacon is received (YES in step 5508) , the processing proceeds to step S509, and if no beacon is received (NO in step 5508) , the processing proceeds to step S513. A case where no beacon is received is a case where the time when the AP 101 transmits a beacon is shifted for some reason and a beacon is transmitted, for example, at time T406 in Fig. 4. According to specifications of IEEE, the AP 101 is required to transmit a beacon at regular intervals and an error of transmission interval is also concretely specified. However, a phenomenon in which the AP 101 transmits a beacon by deviating from the error range thereof has been verified. If the printer 102 is not in power saving mode, the printer 102 is always in the awake state and, therefore, can receive such a beacon transmitted at a shifted time. However, if the printer 102 is in power saving mode, the communication unit 203 is in the awake state only in the predetermined period (from time T403 to time T405 in Fig. 4) and thus, a beacon transmitted at a shifted time (a beacon transmitted at time T406 in Fig. 4) cannot be received. Thus, if a beacon transmitted at a shifted time, packet losses or delays in packet delivery may be caused. If, for example, a discovery packet (a packet to inspect apparatuses present in a network) specified by UPnP is lost or delayed, the communication apparatus will not be able to respond within a specified time. Therefore, an apparatus that transmits the discovery packet cannot discover the communication apparatus. Here, UPnP is an abbreviation of Universal Plug and Play.

In step S509, the decision unit 303 checks the TIM contained in the beacon from the AP 101 to decide whether there is any packet addressed to the printer 102 based on the TIM. If there is a packet addressed to the printer 102 (YES in step S509), the processing proceeds to step S510, and if there is no packet addressed to the printer 102 (NO in step 5509) , the processing proceeds to step S513. A case where there is no packet addressed to the printer 102 is a case where, for example, the AP 101 fails to update the TIM so that whether there is any packet addressed to the printer 102 cannot be checked, or where, for example, the AP 101 transmits a self-packet even if the printer 102 is in the doze state (for example, a self-packet is transmitted at time T402). In this case, the self-packet has been transmitted and the TIM is set by assuming that there is no packet addressed to the printer 102.

If a decision is made that there is a packet addressed to the printer 102, then in step S510, the communication unit 203 notifies the AP 101 that the printer 102 shifts to the active mode using the PM bit. Then, in step S511, the communication unit 203 receives the self-packet transmitted to the AP 101 by the printer 102 in step S504 from the AP 101. In step S512, the acquisition unit 304 acquires a delay time between transmission of a self-packet by the printer 102 in step S504 and reception of the self-packet from the AP 101 in step S511 from the timer 206. Further, the storage unit 202 stores the time acquired in step S512 before the processing proceeds to step S514.

In step S513, on the other hand, the storage unit 202 stores a predetermined time as a delay time between transmission and reception of a self-packet. Here, the value of BI × (LI + 5) (100 ms × (2 + 5) = 700 ms in the present example) is used as the predetermined time.

In step S514, the determination unit 305 determines whether the self-packet has been transmitted a predetermined number of times (10 times, for example). If the self-packet has been transmitted the predetermined number of times (YES in step S514), the processing proceeds to step S515, and if the self-packet has not been transmitted the predetermined number of times (NO in step S514), the processing proceeds to step S504. Accordingly, the delay times can be measured and stored the predetermined number of times.

In step S515, the calculation unit 306 calculates an average value of stored delay times for the predetermined number of times (10 times, for example). In step S516, the judgment unit 307 judges whether the average value calculated in step S515 is smaller than the value of BP x (LI + 1) . Here, the value of BP x (LI + 1) is the maximum delay time that arises when the AP 101 receives a self-packet and transmits the self-packet within the range of specifications defined by IEEE802.11. The above predetermined time is set in such a way that if reception of a self-packet fails once, the average value does not exceed the value of BP x (LI + 1) and if reception of a self-packet fails a plurality of times, the average value exceeds the value of BP x (LI + 1).

In step S516, if the judgment unit 307 judges that the average value is smaller than the value of BP x (LI + 1) (YES in step S516), the processing proceeds to step S517, in which the display unit 204 displays that the AP 101 may be associated in power saving mode. Incidentally, the communication unit 203 may be associated with the AP 101 in power saving mode.

On the other hand, in step S516, if the judgment unit 307 judges that the average value is equal to or greater than the value of BP x (LI + 1) (NO in step S516), the processing proceeds to step S518, in which the display unit 204 gives a warning that it is better not to use the power saving mode. Alternatively, a warning may be given when the user instructs the printer 102 to use the power saving mode. Furthermore, the communication unit 203 may be associated with the AP 101 in active mode. Then, the printing unit 207 performs printing based on data received via the AP 101.

As described above, the printer 102 is caused to operate in power saving mode and a self-packet is transmitted to the AP 101. Then, a delay time between transmission of the self-packet to the AP 101 and reception of the packet from the AP 101 is measured. Then, whether the AP 101 may be associated by using the power saving mode is judged based on whether the measured delay time is within a predetermined time. Accordingly, if the AP 101 operates normally (operates within the range of specifications defined by IEEE802.11) for an apparatus associated in power saving mode, the user can know that the apparatus may be associated in power saving mode. If the AP 101 does not operate normally, the user can know that it is better not to associate the apparatus in power saving mode. Therefore, when associated with the AP 101 as described above, the user can be prevented from switching the printer 102 to the power saving mode. Further, communication with the AP 101 is performed by switching the communication mode according to a judgment result based on the delay time. Here, a first communication mode using the power saving mode and a second communication mode using the active mode are switched.
Accordingly, the printer 102 can communicate with the AP 101 in a communication mode according to the AP 101, so that user's convenience is improved.

In the above example, whether the power saving mode may be used is judged based on the average value of the delay times. However, the present invention is not limited to this and, in step S516, whether the power saving mode may be used may be judged based on the number of times of receiving the self-packet in step S511. If, for example, the self-packet is received seven times or more among 10 times of the predetermined number of times, a judgment is made that the power saving mode may be used. Otherwise, a judgment is made that it is better not to use the power saving mode. Accordingly, whether the power saving mode may be used can be judged without using the timer 206.

In the above example, in step S516, the average value of the delay times is compared with the value of BP x (LI + 1). However, the delay time between transmission of a self-packet to the AP 101 and reception of the self-packet via the AP 101 in active mode may be measured in advance. Then, the value obtained by adding the measured delay time to the value of BP x (LI + 1) may be compared with the average value calculated in step S515. Accordingly, even if transmission of the self-packet is delayed due to many data packets remaining in the AP 101, a judgment whether the power saving mode may be used can be made more accurately.

In step S510, the printer 102 notifies the AP 101 that the printer 102 shifts to the awake state using the PM bit. However, the printer 102 may transmit PsPoll to the AP 101. In this case, the delay time until the AP 101 transmits the self-packet transmitted by the printer 102 in response to PsPoll is measured. If the AP 101 does not transmit the self-packet transmitted by the printer 102, the delay time is set as being equal to the predetermined time (BI x (LI + 5), for example). Based on the delay time measured in this manner, whether the power saving mode may be used is judged.

Further, a first control method for notifying the AP 101 that the printer 102 shifts to the awake state using the PM bit and a second control method for transmitting PsPoll to the AP 101 may be executed in turn to measure the delay time of each method. If delay times measured by both control methods are equal to or greater than the predetermined time (BI x (LI + 1), for example), a judgment is made that it is better not to use the power saving mode. If at least one delay time of delay times measured by two control methods is within the predetermined time (less than BI x (LI + 1), for example), a display is made that the power saving mode can be used by using the control method whose delay time is within the predetermined time. Further, the AP 101 is associated in power saving mode using the control method whose delay time is within the predetermined time. Accordingly, the AP 101 that normally operates in power saving mode using one of the two control methods can also be associated by selecting the control method of the power saving mode that normally operates.

A self-packet of uni-cast is used in the present example, but a data packet of multi-cast may also be used. In this case, in step S516, the judgment unit 307 judges whether the average value calculated in step S515 is smaller than the value of BP × (DTIM + 1). Also in this manner, whether the power saving mode may be used can be judged.

Hardware and software are used in the above environment, but hardware only may be used. Fig. 2C illustrates a hardware configuration diagram when the above example is realized by hardware only.

A communication unit 251 communicates with the communication partner (the AP 101). The communication unit 251 further contains a transmission unit and a reception unit to perform association processing with the AP 101 or to transmit/receive packets (including self-packets) to/from the AP 101. A switching unit 252 controls the communication mode (the power saving mode and the active mode) of the communication unit 251 and, if the communication unit 251 is in power saving mode, switches the state (the awake state and the doze state) of the communication unit 251. A timer unit 253 measures the time between transmission of a self-packet by the communication unit 251 and reception of the self-packet via the AP 101. The timer unit 253 further notifies the switching unit 252 of times when the communication unit 251 is in the doze state.

A storage unit 254 stores the time between transmission of a self-packet by the communication unit 251 and reception of the self-packet via the AP 101. A calculation unit 255 acquires the time between transmission of a self-packet by the communication unit 251 and reception of the self-packet via the AP 101 a plurality of times from the storage unit 254 to calculate an average value of acquired times. A judgment unit 256 judges whether to operate the communication unit 251 in power saving mode based on a calculation result of the calculation unit 255. A display unit 257 makes a notification to the user according to a judgment result by the judgment unit 256.

First, the communication unit 251 is associated with the AP 101 (corresponding to step 5503). Then, the communication unit 251 transmits a self-packet to the AP 101 (corresponding to step 5504). Further, the communication unit 251 notifies the switching unit 252 and the timer unit 253 that a self-packet has been transmitted. After receiving the notification, the timer unit 253 activates a timer. After receiving the notification, the switching unit 252 instructs the communication unit 251 to notify the AP 101 that the communication unit 251 shifts to the doze state and to shift to the doze state. Following the instruction, the communication unit 251 notifies the AP 101 that the communication unit 251 shifts to the doze state (corresponding to step S505) and shifts to the doze state (corresponding to step 5506) . Further, the switching unit 252 notifies the timer unit 253 that the communication unit 251 shifts to the doze state. After receiving the notification, the timer unit 253 measures a predetermined time according to the LI. Then, after the predetermined time passes, the timer unit 253 notifies the switching unit 252 that the predetermined time has passed.

After receiving the notification, the switching unit 252 instructs the communication unit 251 to shift to the awake state. Following the instruction, the communication unit 251 shifts to the awake state (corresponding to step 5507) . Then, the communication unit 251 receives the self-packet from the AP 101 (corresponding to step 5511). After receiving the self-packet, the communication unit 251 notifies the timer unit 253 that the self-packet has been received. After receiving the notification, the timer unit 253 notifies the storage unit 254 of the delay time between transmission and reception of the self-packet (corresponding to step S512). If a specified number of delay times are not stored in the storage unit 254, the communication unit 251 executes the transmission of the self-packet described above. On the other hand, if the specified number of delay times are stored in the storage unit 254, the communication unit 251 interrupts the above processing (corresponding to step S514).

Subsequently, the calculation unit 255 calculates an average value of a plurality of delay times stored in the storage unit 254 (corresponding to step S515). Then, the calculation unit 255 notifies the judgment unit 256 of a calculation result. The judgment unit 256 judges whether to execute the power saving mode or the active mode based on the calculation result notified from the calculation unit 255 (corresponding to step S516). The switching unit 252 and the display unit 257 are notified of a judgment result thereof. The display unit 257 makes a display according to the judgment result to notify the user that communication should be performed in active mode (corresponding to steps S517 and S518). Also, the switching unit 252 manages the mode of the communication unit 251 according to the judgment result.

A similar effect can be obtained as described above without using software.

In the first example described above, the printer 102 shifts from the active mode to the power saving mode. In an exemplary embodiment of the present invention, a judgment is made whether the printer 102 may be associated with the AP 101 in power saving mode without shifting to the power saving mode.

In the exemplary embodiment, a system configuration, a hardware configuration of the printer 102, and a functional block of the printer 102 are similar to those in the first example and thus, a description thereof will not be repeated. In the present exemplary embodiment, the judgment unit 307 judges whether any data packet has been received while in a pseudo-doze state (third state). The pseudo-doze state is a state of a time period in the doze state when communicating in power saving mode, but actually the awake state. So in other words, the pseudo-doze state is a state in which the printer 102 informs the base station that it has shifted to the power saving mode but actually maintains the active mode (awake state).

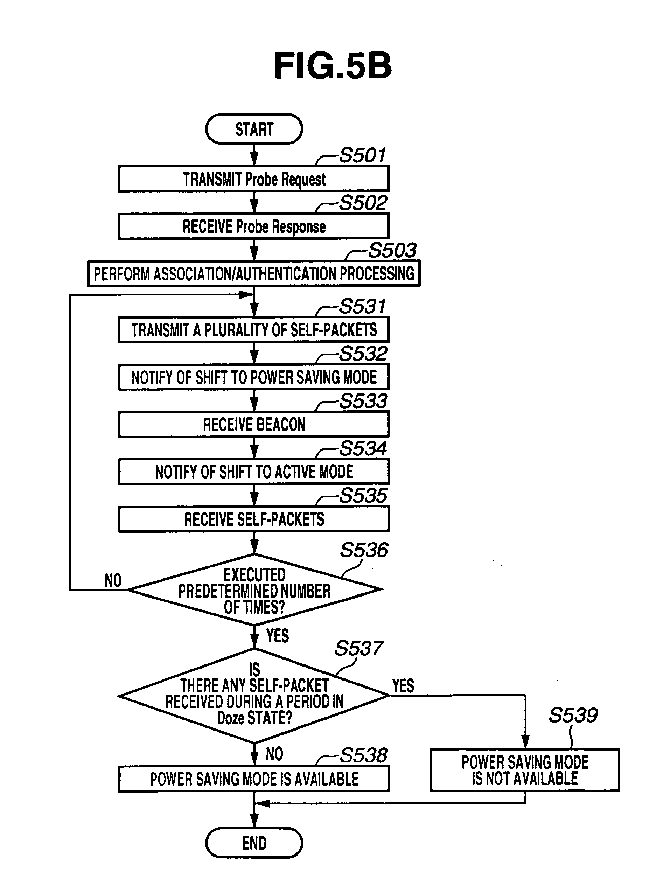

Fig. 5B illustrates a flow chart executed with a program stored in the storage unit 202 being read by the CPU 201. The flow chart is executed when the printer 102 is turned on. Steps S501 to S503 are similar to those in the first example and thus, a description thereof will not be repeated.

In step S531, the communication unit 203 transmits a plurality of self-packets (10 self-packets, for example) to the AP 101. When transmission of the plurality of self-packets is completed, in step S532, the communication unit 203 notifies the AP 101 that the printer 102 shifts to the power saving mode using the PM bit. However, the printer 102 does not actually shift to the power saving mode and remains in active mode (awake state). That is, the printer 102 is in the pseudo-doze state. In the pseudo-doze state, the printer 102 can receive data packets transmitted from the AP 101.

In step S533, the communication unit 203 receives a beacon from the AP 101. Then, the decision unit 303 checks the TIM contained in the received beacon to decide whether there is any data packet addressed to the printer 102 itself. If a decision is made that there is a packet addressed to the printer 102 itself, the processing proceeds to step S534 and the communication unit 203 notifies the AP 101 that the printer 102 shifts to the active mode using the PM bit. The pseudo-doze state is thereby released.

In step S535, the communication unit 203 receives the self-packets transmitted in step S531 from the AP 101. Here, the number of received packets (3, for example) is smaller than the number of self-packets transmitted in step S531. The number of self-packets received in step S535 may be changed (may differ) each time step S535 is executed. In step S536, the determination unit 305 determines whether the operation in steps S531 to S535 has been performed a predetermined number of times (10 times, for example). If the operation has been performed the predetermined number of times (YES in step S536), the processing proceeds to step S537, and if the operation has not been performed the predetermined number of times (NO in step S536), the processing proceeds to step S531.

In step S537, the judgment unit 307 judges whether any data packet is received while in the pseudo-doze state. If a data packet is received while in the pseudo-doze state (YES in step 5537), the processing proceeds to step S539, and if no data packet is received while in the pseudo-doze state (NO in step S537), the processing proceeds to step S538.

In step S538, the display unit 204 makes a display that the AP 101 may be associated in power saving mode. Further, the communication unit 203 may be associated with the AP 101 in power saving mode. In step S539, the display unit 204 gives a warning that it is better not to use the power saving mode. Further, the communication unit 203 may be associated with the AP 101 in active mode.

When the printer 102 is associated with the AP 101 in power saving mode, as described above, whether the AP 101 operates normally can be checked, so that user's convenience can be improved.

When the printer 102 is associated with the AP 101 in power saving mode, the PC 103 may be notified of whether the AP 101 operates normally to let the user know a result thereof via a display unit (not illustrated) of the PC 103. Accordingly, particularly if the display unit 204 of the printer 102 is small, the user can know the result via the large display unit of the PC 103 and, therefore, user's convenience can be improved.

In the first example and exemplary embodiment, the printer 102 transmits a self-packet (or self-packets) to execute control concerning power saving based on the timing of receiving the self-packet (or self-packets) delivered by the AP 101. In a third example, falling outside the scope of the present invention, the PC 103 transmits a data packet addressed to the printer 102 to execute control concerning power saving based on the timing of receiving a response packet from the printer 102.

In the third example, a system configuration, a hardware configuration of the printer 102, and a functional block of the printer 102 are similar to those in the first example and thus, a description thereof will not be repeated. Fig. 2B illustrates a hardware configuration of the PC 103. As will be understood the PC 103 may be, but does not need to be, operable in a power saving mode.

A central processing unit (CPU) 221 reads a program stored in a storage unit described below to execute the program. A storage unit 222 includes a memory such as a RAM and a ROM. The storage unit 222 stores the LI specified by IEEE802.11 as information concerning the power saving mode. Here, the LI is set to 2 and the PC 103 receives a beacon as an informative signal transmitted by the AP 101 once in every two times. The storage unit 222 also stores a program described below or the like. A communication unit 223 having an antenna performs radio communication with the AP 101. The communication unit 223 can communicate with the AP 101 using one of the active mode and the power saving mode. Moreover, the AP 101 can be notified of which communication mode of the active mode and the power saving mode is applied using the PM bit. A display unit 224 makes various kinds of display. An operation unit 225 receives operations from the user. The display unit 224 and the operation unit 225 may be formed to be the same component by using a touch panel or the like. A timer 226 measures time. These hardware components are connected by a bus.

Fig. 3B illustrates a functional block diagram realized by a program stored in the storage unit 222 being read by the CPU 221. These functional blocks may be realized by a hardware configuration such as ASIC.

An acquisition unit 331 acquires a delay time between the time when the PC 103 transmits a request packet addressed to the printer 102 and the time when the response packet is received from the AP 101. A determination unit 332 determines whether a request packet addressed to the printer 102 has been transmitted a predetermined number of times. The request packet is a packet that requests a reply packet (response packet) from the printer 102 that has received the request packet. A calculation unit 333 calculates an average value of the delay times. A judgment unit 334 judges whether the average value of the delay times calculated by the calculation unit 333 is greater or smaller than a predetermined time.

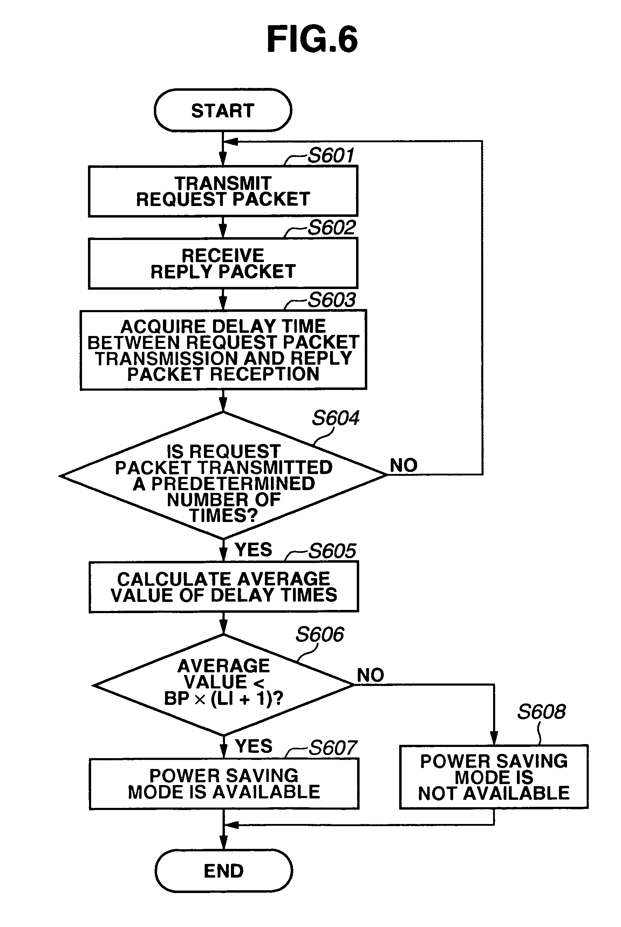

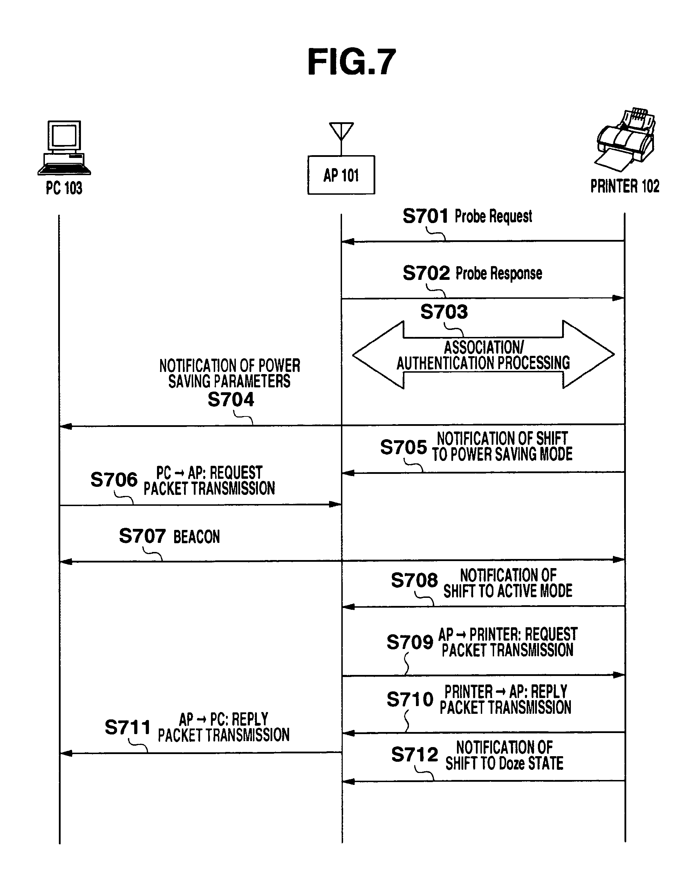

Fig. 6 illustrates a flow chart executed with a program stored in the storage unit 202 being read by the CPU 201. Fig. 7 illustrates a sequence chart in the present example. It is assumed that the AP 101 and the PC 103 are connected as the initial state.

In step S701, the printer 102 first transmits a probe request to the AP 101. In step S702, the AP 101 transmits a probe response to the printer 102 as a response to the probe request. Then, in step S703, the AP 101 and the printer 102 perform association and authentication processing conforming to the IEEE802.11 series. Here, the printer 102 is associated with the AP 101 in power saving mode. Alternatively, the PC 103 may instruct the printer 102 to be associated with the AP 101 in power saving mode.

In step S704, the printer 102 associated with the AP 101 transmits parameters concerning power saving to the PC 103. Parameters concerning power saving include Beacon Interval (100 ms, for example) of the AP 101 and the LI (2, for example) of the printer 102. After parameters concerning power saving being transmitted, in step S705, the printer 102 notifies the AP 101 of shift to the power saving mode and shifts to the power saving mode.

In step S601, the communication unit 223 transmits a request packet addressed to the printer 102 (5706). The transmitted request packet is received by the AP 101. The AP 101 notifies the printer 102 that there is a packet addressed to the printer 102 using the TIM contained in a beacon (S707). The printer 102, which is notified that there is a packet addressed to the printer 102, notifies the AP 101 of shift to the active mode (S708). Further, the printer 102 receives the request packet transmitted by the AP 101 (S709). The printer 102 transmits a reply packet (response packet) addressed to the PC 103 as a response to the request packet (S710). The transmitted reply packet is received by the AP 101 (5711). After transmission of the reply packet being completed, the printer 102 notifies that AP 101 of shift to the power saving mode (S712) and shifts to the power saving mode.

In step S602, the communication unit 223 receives the reply packet (S711), and the processing proceeds to step S603. If no reply packet is received after the predetermined time (BI x (LI + 5), for example) passes, the processing also proceeds to step S603. In step S603, the acquisition unit 331 acquires the delay time between transmission of the request packet by the PC 103 in step S601 and reception of the reply packet from the AP 101 in step S602 from the timer 226. If the communication unit 223 cannot receive the reply packet, the acquisition unit 331 acquires the value of BI x (LI + 5) as the delay time. In step S604, the determination unit 332 determines whether the request packet has been transmitted the predetermined number of times (10 times, for example) in step S601. If the request packet has been transmitted the predetermined number of times (YES in step S604), the processing proceeds to step S605, and if the request packet has not been transmitted the predetermined number of times (NO in step S604), the processing proceeds to step S601.

In step S605, the calculation unit 333 calculates an average value of stored delay times for the predetermined number of times (10 times, for example). In step S606, the judgment unit 334 judges whether the average value calculated in step S605 is smaller than the value of BP x (LI + 1). If the average value is judged to be smaller than the value of BP x (LI + 1) (YES in step S606), the processing proceeds to step S607, in which the display unit 224 gives a warning that the AP 101 may be associated in power saving mode. Further, the communication unit 223 may be associated with the AP 101 in power saving mode. If, on the other hand, the average value is judged to be equal to or greater than the value of BP x (LI + 1) (NO in step S606), the processing proceeds to step 5608, in which the display unit 224 makes a display that it is better not to use the power saving mode. Further, the communication unit 223 may be associated with the AP 101 in active mode. Alternatively, the printer 102 may be associated with the AP 101 in active mode.

By performing communication between a communication apparatus (the PC 103) and another communication apparatus (the printer 102), as described above, whether the AP 101 operates normally can be checked when the communication apparatus or the other communication apparatus is associated with the AP 101 in power saving mode. Accordingly, whether the AP 101 operates normally can be checked even for an apparatus to which the printer 102 cannot transmit a self-packet.

In the first and third examples and the exemplary embodiment, whether the printer 102 may be associated with the AP 101 in power saving mode is checked using a test packet such as a self-packet and request packet. In a further exemplary embodiment of the present invention, in addition to this, information about types (such as a model number and firmware) of access points whose connectivity is problematic is stored in the storage unit 202 in advance, and whether the printer 102 may be associated with the AP 101 in power saving mode is checked based on the information. If the AP 101 supports WPS, the printer 102 and the PC 103 can acquire information about the model number and firmware of the AP 101 from probe response. More specifically, information about the model number can be acquired from manufacturer and model name stored in the probe response and information about firmware from model number. WPS is an abbreviation of Wi-Fi Protected Setup. In WPS, communication parameters such as an encryption key and an encryption method can be exchanged between the AP 101 and the printer 102 for connection by buttons held by each of the AP 101 and the printer 102 being pressed by the user. Instead of pressing buttons, a personal identification number (PIN) may be input. The printer 102 or the PC 103 may acquire information about the model number and firmware of the AP 101 using a higher-level application such as UPnP.

The printer 102 first receives a notification from the AP 101 indicating that the AP 101 supports the power saving mode. Even if the power saving mode is supported, as shown in the first example, the AP 101 and the printer 102 in power saving mode may not communicate normally. Thus, the printer 102 judges whether a base station can communicate normally based on type information (the model number and firmware) of the AP 101 even if the AP 101 communicates with the printer 102 in power saving mode. Accordingly, no judgment is made about base stations that do not support the power saving mode, thus making judgment work efficient.

If, as a result of judgment, the AP 101 matches type information stored in the storage unit 202, the display unit 204 gives a warning that it is better not to use the power saving mode. Further, the communication unit 203 may be associated with the AP 101 in active mode.

If, as a result of judgment, the AP 101 does not match type information stored in the storage unit 202, the printer 102 or the PC 103 executes a flow chart shown in the first and third examples and the exemplary embodiment. Thus, whether the AP 101 operates normally can be checked for access points whose connectivity problem is known in advance without transmitting a test packet.

While information about types (such as a model number and firmware) of access points whose connectivity is problematic is stored in the storage unit 202 in advance, the information may be recognized via a network.

The present invention may also be carried out by supplying a computer readable recording medium recording a program code of software to realize the above functions to a system or an apparatus so that the program code stored in the recording medium is read and executed by the system or the apparatus.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.

## Claims

1. A communication apparatus (102, 103), arranged to communicate with a base station (101) in an active mode or a power saving mode, comprising:
communication means configured to transmit a self-addressed test packet to the base station, receive the self-addressed test packet from the base station and to notify the base station (101) in the case that the communication apparatus (102) shifts to the power saving mode; **characterized by** comprising:
control means (221) configured to execute control so that the base station is notified of a shift to the power saving mode by the communication means even though communication with the base station is maintained in an active mode; and
judgment means (256, 307, 334) configured to judge whether the power saving mode is to be used in communication with the base station (101) based on whether the self-addressed test packet is received by the communication apparatus in a time period when no packet could be received from the base station if the communication apparatus was operating in the power saving mode.

2. A communication apparatus according to claim 1, further comprising display means (204, 257) configured to display a warning to a user if the test packet is received in the time period when no packet could be received from the base station if the communication apparatus was operating in the power saving mode.

3. A communication apparatus according to claim 1 or 2, wherein the communication means (203, 251) is configured to continue to communicate with the base station in the active mode if the test packet is received in the time period when no packet could be received from the base station if the communication apparatus was operating in the power saving mode.

4. A communication apparatus according to any preceding claim, further comprising determination means (201, 221) configured to determine a type of the base station,
wherein the judgment means further judges the base station based on a determination by the determination means.

5. A method for controlling a communication apparatus, arranged to communicate with a base station in an active mode or a power saving mode, the method comprising:
transmitting a self-addressed test packet to the base station;
**characterized by**
notifying the base station of a shift to the power saving mode by the communication means even though communication with the base station is maintained in the active mode; and
judging whether the power saving mode is to be used in communicating with the base station based on whether the self-addressed test packet is received by the communication means from the base station in a time period when no packet could be received from the base station if the communication apparatus was operating in the power saving mode.

6. A method according to claim 5, further comprising displaying a warning to a user if the test packet is received in the time period when no packet could be received from the base station if the communication apparatus was operating in the power saving mode.

7. A method according to claim 5 or 6, wherein communication with the base station is continued in the active mode if the test packet is received in the time period when no packet could be received from the base station if the communication apparatus was operating in the power saving mode.

8. A method according to any of preceding claims 5 to 7, further comprising an initial determination step of determining a type of the base station and an initial judgment step of judging whether the base station supports the power saving mode based on the determined type of base station wherein if it is judged in the initial judgment step that the base station does not support the power saving mode then the transmitting step, notifying step and judging step are not performed wherein if it is judged in the initial judgment step that the base station does support the power saving mode then the transmitting step, notifying step and judging steps are performed.

9. A program which on execution by a programmable communication apparatus causes the communication apparatus to perform a method for controlling a communication apparatus according to any of claims 5 to 8.

10. A computer-readable storage medium storing a program according to claim 9.

## Patentansprüche

1. Kommunikationsvorrichtung (102, 103), ausgebildet zum Kommunizieren mit einer Basisstation (101) in einem Aktivmodus oder einem Energiesparmodus, umfassend:
eine Kommunikationseinrichtung, konfiguriert zum Senden eines selbstadressierten Testpakets an die Basisstation, zum Empfangen des selbstadressierten Testpakets von der Basisstation und zum Benachrichtigen der Basisstation (101), falls die Kommunikationsvorrichtung (102) in den Energiesparmodus übergeht,
**gekennzeichnet durch**:
eine Steuereinrichtung (221), konfiguriert zum Ausführen einer derartigen Steuerung, dass die Basisstation über einen Übergang der Kommunikationseinrichtung in den Energiesparmodus benachrichtigt wird, selbst wenn die Kommunikation mit der Basisstation in einem Aktivmodus aufrecht erhalten wird; und
eine Beurteilungseinrichtung (256, 307, 334), konfiguriert zum Beurteilen, ob der Energiesparmodus bei der Kommunikation mit der Basisstation (101) zu verwenden ist, basierend darauf, ob das selbstadressierte Testpaket von der Kommunikationsvorrichtung innerhalb einer Zeitspanne empfangen wurde, in der von der Basisstation kein Paket hätte empfangen werden können, falls die Kommunikationsvorrichtung im Energiesparmodus gearbeitet hätte.

2. Kommunikationsvorrichtung nach Anspruch 1, ferner umfassend eine Anzeigeeinrichtung (204, 257), konfiguriert zum Anzeigen einer Warnung für einen Benutzer, falls das Testpaket innerhalb der Zeitspanne empfangen wurde, in der kein Paket von der Basisstation hätte empfangen werden können, falls die Kommunikationsvorrichtung im Energiesparmodus gearbeitet hätte.

3. Kommunikationsvorrichtung nach Anspruch 1 oder 2, wobei die Kommunikationseinrichtung (203, 251) konfiguriert ist zum Fortsetzen der Kommunikation mit der Basisstation im Aktivmodus, falls das Testpaket innerhalb der Zeitspanne empfangen wurde, in der von der Basisstation kein Paket hätte empfangen werden können, falls die Kommunikationsvorrichtung im Energiesparmodus gearbeitet hätte.

4. Kommunikationsvorrichtung nach einem vorhergehenden Anspruch, ferner umfassend eine Bestimmungseinrichtung (201, 221), konfiguriert zum Bestimmen eines Typs der Basisstation,
wobei die Beurteilungseinrichtung ferner die Basisstation basierend auf der durch die Bestimmungseinrichtung vorgenommenen Bestimmung beurteilt.

5. Verfahren zum Steuern einer Kommunikationsvorrichtung, ausgebildet zum Kommunizieren mit einer Basisstation in einem Aktivmodus oder einem Energiesparmodus, wobei das Verfahren umfasst:
Senden eines selbstadressierten Testpakets an die Basisstation;
**gekennzeichnet durch** das
Benachrichtigen der Basisstation, dass die Kommunikationseinrichtung in den Energiesparmodus übergegangen ist, selbst wenn die Kommunikation mit der Basisstation im Aktivmodus aufrecht erhalten wird; und
Beurteilen, ob der Energiesparmodus beim Kommunizieren mit der Basisstation zu verwenden ist, basierend darauf, ob das selbstadressierte Testpaket **durch** die Kommunikationseinrichtung von der Basisstation innerhalb einer Zeitspanne empfangen wurde, in der von der Basisstation kein Paket hätte empfangen werden können, falls die Kommunikationsvorrichtung im Energiesparmodus gearbeitet hätte.

6. Verfahren nach Anspruch 5, ferner umfassend das Anzeigen einer Warnung für einen Benutzer, falls das Testpaket innerhalb der Zeitspanne empfangen wurde, in der kein Paket von der Basisstation hätte empfangen werden können, falls die Kommunikationsvorrichtung im Energiesparmodus gearbeitet hätte.

7. Verfahren nach Anspruch 5 oder 6, wobei die Kommunikation mit der Basisstation im Aktivmodus fortgesetzt wird, falls das Testpaket innerhalb der Zeitspanne empfangen wurde, in der von der Basisstation kein Paket hätte empfangen werden können, falls die Kommunikationsvorrichtung im Energiesparmodus gearbeitet hätte.

8. Verfahren nach einem der Ansprüche 5 bis 7, ferner umfassend einen Anfangsbestimmungsschritt des Bestimmens eines Typs der Basisstation und einen Anfangsbeurteilungsschritt des Beurteilens, ob die Basisstation den Energiesparmodus unterstützt, basierend auf dem bestimmten Typ der Basisstation, wobei der Sendeschritt, der Benachrichtigungsschritt und der Beurteilungsschritt nicht durchgeführt werden, falls im Anfangsbeurteilungsschritt beurteilt wird, dass die Basisstation den Energiesparmodus nicht unterstützt, wohingegen der Sendeschritt, der Benachrichtigungsschritt und die Beurteilungsschritte durchgeführt werden, falls im Anfangsbeurteilungsschritt beurteilt wird, dass die Basisstation den Energiesparmodus unterstützt.

9. Programm, welches bei Ausführung in einer programmierbaren Kommunikationsvorrichtung diese veranlasst, ein Verfahren zum Steuern einer Kommunikationsvorrichtung nach einem der Ansprüche 5 bis 8 durchzuführen.

10. Computerlesbares Speichermedium, das ein Programm nach Anspruch 9 speichert.

## Revendications

1. Appareil de communication (102, 103), conçu pour communiquer avec une station de base (101) dans un mode actif ou un mode d'économie d'énergie, comprenant :
un moyen de communication configuré pour transmettre un paquet de test auto-adressé à la station de base, recevoir le paquet de test auto-adressé de la station de base et avertir la station de base (102) dans le cas où l'appareil de communication (102) passe en mode d'économie d'énergie ;
**caractérisé en ce qu'**il comprend :
un moyen de commande (221) configuré pour exécuter une commande afin que la station de base soit avertie d'un passage en mode d'économie d'énergie par le moyen de communication malgré le fait que la communication avec la station de base soit maintenue en mode actif ; et
un moyen d'évaluation (256, 307, 334) configuré pour évaluer si le mode d'économie d'énergie doit être utilisé en communication avec la station de base (101) sur la base du fait que le paquet de test auto-adressé a ou non été reçu par l'appareil de communication pendant une période de temps lors de laquelle aucun paquet n'a pu être reçu de la station de base si l'appareil de communication fonctionnait en mode d'économie d'énergie.

2. Appareil de communication selon la revendication 1, comprenant en outre un moyen d'affichage (204, 257) configuré pour présenter un avertissement à un utilisateur si le paquet de test est reçu pendant la période de temps lors de laquelle aucun paquet n'a pu être reçu de la station de base si l'appareil de communication fonctionnait en mode d'économie d'énergie.

3. Appareil de communication selon la revendication 1 ou 2, dans lequel le moyen de communication (203, 251) est configuré pour continuer de communiquer avec la station de base en mode actif si le paquet de test est reçu pendant la période de temps lors de laquelle aucun paquet n'a pu être reçu de la station de base si l'appareil de communication fonctionnait en mode d'économie d'énergie.

4. Appareil de communication selon l'une quelconque des revendications précédentes, comprenant en outre un moyen de détermination (201, 221) configuré pour déterminer un type de la station de base,
dans lequel le moyen d'évaluation évalue en outre la station de base sur la base d'une détermination effectuée par le moyen de détermination.

5. Procédé de commande d'un appareil de communication, conçu pour communiquer avec une station de base en mode actif ou en mode d'économie d'énergie, le procédé consistant à :
transmettre un paquet de test auto-adressé à la station de base ;
**caractérisé par :**
**le fait que** le moyen de communication avertisse la station de base d'un passage en mode d'économie d'énergie même si la communication avec la station de base est maintenue en mode actif ; et
l'évaluation du fait que le mode d'économie d'énergie doit ou non être utilisé en communication avec la station de base sur la base du fait que le paquet de test auto-adressé a ou non été reçu par le moyen de communication en provenance de la station de base pendant une période de temps lors de laquelle aucun paquet n'a pu être reçu de la station de base si l'appareil de communication fonctionnait en mode d'économie d'énergie.

6. Procédé selon la revendication 5, comprenant en outre la présentation à un utilisateur d'un avertissement si le paquet de test est reçu pendant la période de temps lors de laquelle aucun paquet n'a pu être reçu de la station de base si l'appareil de communication fonctionnait en mode d'économie d'énergie.

7. Procédé selon la revendication 5 ou 6, dans lequel la communication avec la station de base est poursuivie en mode actif si le paquet de test est reçu pendant la période de temps lors de laquelle aucun paquet n'a pu être reçu de la station de base si l'appareil de communication fonctionnait en mode d'économie d'énergie.

8. Procédé de communication selon l'une quelconque des revendications 5 à 7, comprenant en outre une étape de détermination consistant à déterminer un type de la station de base et une étape d'évaluation initiale consistant à évaluer si la station de base prend en charge le mode d'économie d'énergie sur la base du type déterminé de la station de base, dans lequel, s'il est évalué lors de l'étape d'évaluation initiale que la station de base ne prend pas en charge le mode d'économie d'énergie, l'étape de transmission, l'étape d'avertissement et l'étape d'évaluation ne sont alors pas effectuées, et dans lequel, s'il est évalué lors de l'étape d'évaluation initiale que la station de base ne prend pas en charge le mode d'économie d'énergie, l'étape de transmission, l'étape d'avertissement et les étapes d'évaluation sont alors effectuées.

9. Programme qui, lors de son exécution par un appareil de communication programmable, fait en sorte que l'appareil de communication mette en oeuvre le procédé de commande d'un appareil de communication selon l'une quelconque des revendications 5 à 8.

10. Support de stockage lisible par ordinateur stockant un programme selon la revendication 9.
